# EUROPÄISCHE PATENTSCHRIFT

(11) **EP 1 689 601 B1**
(45) Veröffentlichungstag und Bekanntmachung des Hinweises auf die Patenterteilung: **23.05.2007**
(21) Anmeldenummer: 04797777.2
(22) Anmeldetag: 10.11.2004
(51) Int. Cl.: B60H 1/00

(54) **KLAPPE, INSBESONDERE FÜR EIN LUFTFÜHRUNGSGEHÄUSE EINER KRAFTFAHRZEUG-KLIMAANLAGE**
FLAP, PARTICULARLY FOR AN AIR DUCT HOUSING OF A MOTOR VEHICLE AIR-CONDITIONING SYSTEM
CLAPET, EN PARTICULIER POUR UN CARTER DE GUIDAGE D'AIR D'UN SYSTEME DE CLIMATISATION DE VEHICULE

(30) Priorität: 27.11.2003 DE 10356002
(43) Veröffentlichungstag der Anmeldung: 16.08.2006
(73) Patentinhaber: Behr GmbH & Co. KG, 70469 Stuttgart (DE)
(72) Erfinder: BURKHARDT, Carsten, 74653 Künzelsau (DE); DIEKSANDER, Wolfgang, 70794 Filderstadt (DE)
(86) Internationale Anmeldenummer: PCT/EP2004/012716
(87) Internationale Veröffentlichungsnummer: WO 2005/061248

(56) Entgegenhaltungen:
- DE-A1- 19 631 371
- FR-A1- 2 608 102
- US-A1- 2002 009 968

## Beschreibung

Die Erfindung betrifft eine Klappe für ein Luftführungsgehäuse einer Kraftfahrzeug-Klimaanlage gemäß dem Oberbegriff des Anspruchs 1.

In Luftführungsgehäusen wird eine Mehrzahl von Klappen verwendet, welche die Luftströmung in unterschiedlichen Luftkanälen steuern. Dies ist insbesondere der Fall, wenn Kaltluft und Warmluft mittels einer Mischklappe gezielt gemischt werden sollen. Dabei kann eine Klappe mit einem im Wesentlichen flach ausgebildeten Bereich, der zum Verschließen der Luftkanäle dient, vorgesehen sein, die um eine Schwenkachse verschwenkbar ist, mit Hilfe derer zwei in einem Winkel zueinander angeordnete Luftkanäle verschließbar sind. Hierbei treten häufig Probleme bei der Dichtheit der Klappe auf, welche in einer Endstellung den Kaltluftkanal und in ihrer anderen Endstellung den Warmluftkanal verschließt.

Aus der EP 0 740 617 B1 ist eine Jalousie-Klappe bekannt. Hierbei sind in den Luftkanälen in ihrem Querschnitt an den Querschnitt der Luftkanäle angepasste Einbaurahmen mit mehreren im. Rahmen geführten Lamellen vorgesehen, wobei die Lamellen in ihrer Schließstellung den Querschnitt des Rahmens vollständig abdecken. Die Lamellen lassen sich dabei um ca. 90° schwenken. Dabei können mehrere Rahmen, die sternförmig angeordnet sind, vorgesehen sein, so dass je Klappe ein Luftkanal geregelt werden kann. Ein gemeinsamer Antrieb kann durch eine drehbare Kurvenscheibe gebildet sein. Bei einer derartigen Jalousie-Klappe treten jedoch Probleme in Hinblick auf die Dichtheit auf.

Aus der gattungsgemäßen US2002/0009968 ist weiterhin eine Misch-Klappe bekannt, wobei in beiden Endstellungen die gleiche Fläche des Bereichs der Klappe in Richtung zur jeweiligen, zu verschließenden Öffnung zeigt.

Es ist Aufgabe der Erfindung, eine verbesserte Klappe für ein Luftführungsgehäuse einer Kraftfahrzeug-Klimaanlage zur Verfügung zu stellen.

Diese Aufgabe wird gelöst durch eine Klappe mit den Merkmalen des Anspruchs 1. Vorteilhafte Ausgestaltungen sind Gegenstand der Unteransprüche.

Erfindungsgemäß ist eine Klappe, insbesondere Misch-Klappe für ein Luftführungsgehäuse einer Kraftfahrzeug-Klimaanlage, vorgesehen, die in ihren beiden Endstellungen zwei unterschiedliche Öffnungen verschließt, wobei die Klappe einen im Wesentlichen ebenen Bereich mit zwei sich im Wesentlichen eben erstreckenden Flächen aufweist, die auf den beiden einander gegenüberliegenden Seiten des Bereichs angeordnet sind, und um eine Klappenachse verschwenkbar angeordnet ist, und in beiden Endstellungen die gleiche Fläche des Bereichs der Klappe in Richtung zur jeweiligen, zu verschließenden Öffnung zeigt. Durch eine derartige Ausgestaltung muss nur eine Seite zur Abdichtung geeignet ausgebildet sein, so dass sich die Abdichtung vereinfacht. Die andere Seite kann bedarfsgerecht ausgebildet sein und gegebenenfalls auch mit Luftführungselementen versehen sein.

Die Klappe ist hierbei bevorzugt um eine sich räumlich bewegte Klappenachse schwenkbar, so dass sich eine strömungsgünstigere Bewegung bei Stellvorgängen und strömungsgünstigere Zwischenstellungen der Klappe ergeben.

Die Klappe weist bevorzugt mindestens einen, vorzugsweise Hebelarme auf, die beidseitig des im Wesentlichen ebenen Bereichs angeordnet sind und wobei eine Relativbewegung zwischen Hebelarm und ebenem Bereich möglich ist. Hierbei ist mindestens ein Freiheitsgrad in Form einer Schwenkbewegung, bevorzugt aber zwei Freiheitsgrade in Form einer Schwenkbewegung und einer Längsverschiebung, vorgegeben.

Der Hebelarm weist bevorzugt ein Langloch auf, das sich in seiner Längsrichtung erstreckt.

Zwischen dem Hebelarm und der Klappenachse ist bevorzugt eine Getriebeverbindung vorgesehen, insbesondere in Form einer Zahnstange, die bevorzugt am Hebelarm ausgebildet ist, und eines Zahnrads, das bevorzugt an der Klappenachse ausgebildet ist, die eine rutschfreie und definierte Verbindung zwischen Hebelarm und Klappenachse und somit dem im Wesentlichen ebenen Bereich der Klappe ermöglichen.

Bevorzugt ist eine in einer Kurve verlaufende Führung, insbesondere in Form einer im Luftführungsgehäuse ausgebildeten Führungsnut, vorgesehen. Dabei ragt ein an der Klappenachse ausgebildeter, überstehender Zapfen durch das am schwenkbaren Hebelarm ausgebildete Langloch bis in die Führungsnut, in welcher er geführt ist. Dies ermöglicht eine bedarfsgerechte Stellbewegung durch die durch die Führungsnut gebildete Steuerfunktion, so dass eine einfache Schwenkbewegung des Hebelarms in eine komplizierte Stellbewegung umgewandelt werden kann.

Die Klappenachse ist bevorzugt auf der zweiten Fläche angeordnet, die auf der der ersten Fläche gegenüberliegenden Seite des ebenen Bereichs ausgebildet ist. Dies ermöglicht eine optimierte Ausgestaltung der ersten Fläche in Hinblick auf deren Verschlußfunktion:

Zur Minimierung der auftretenden Kräfte ist die Klappenachse etwa mittig bezüglich des ebenen Bereichs angeordnet.

Eine derartige Klappe wird bevorzugt als Misch-Klappe in einer Kraftfahrzeug-Klimaanlage verwendet.

Im Folgenden wird die Erfindung anhand eines Ausführungsbeispiels unter Bezugnahme auf die Zeichnung im Einzelnen erläutert. In der Zeichnung zeigen:

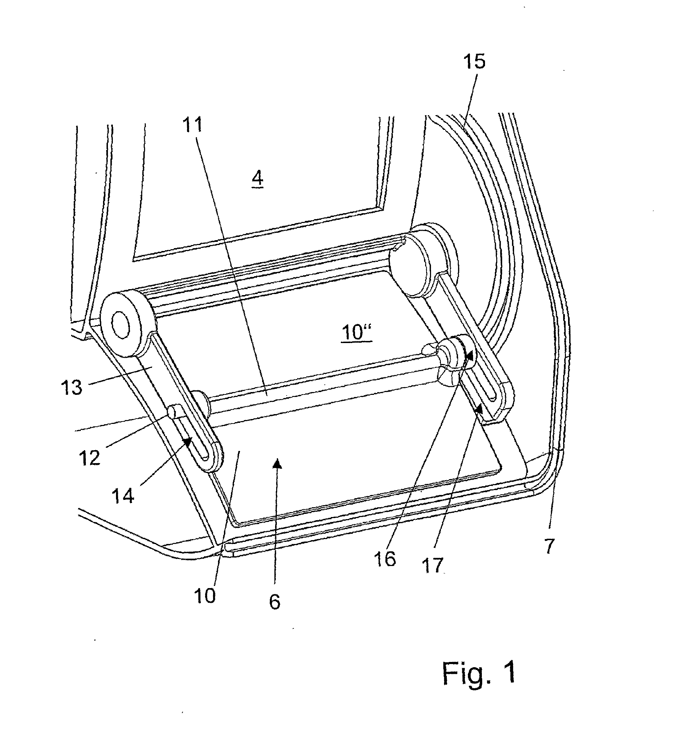

- Fig. 1: eine perspektivische Ansicht der erfindungsgemäßen Klappe in der Warm-Stellung,
- Fig. 2: einen Schnitt durch Fig. 1, der die Klappe in der Warm-Stellung zeigt,
- Fig. 3: einen Schnitt durch Fig. 1, der die Klappe in der Misch-Stellung zeigt,
- Fig. 4: einen Schnitt durch Fig. 1, der die Klappe in der Kalt-Stellung zeigt,
- Fig. 5: eine Fig. 1 entsprechende Darstellung,
- Fig. 6: eine perspektivische Ansicht der Klappe von Fig. 1 in der Misch-Stellung, und
- Fig. 7: eine perspektivische Ansicht der Klappe von Fig. 1 in der Kalt-Stellung.

Eine Kraftfahrzeug-KÜmaanlage 1 mit einem Gebläse (nicht dargestellt), einem Verdampfer 3, einem Heizer 4 und einem Zuheizer 5 weist zur bedarfsgerechten Temperierung und Erzeugung einer geschichteten Luftströmung eine Misch-Klappe 6 auf, die in einem mehrteilig ausgebildeten Luftführungsgehäuse 7 angeordnet sind.

Die Klappe 6 ist nach dem Verdampfer 3 derart angeordnet, dass sie in ihrer einen Endstellung den Weg durch den Heizer 4 und Zuheizer 5 versperrt und den Weg über einen Bypass 8 hierzu freigibt (Kalt-Stellung) und in ihrer anderen Endstellung den Weg durch den Bypass 8 versperrt und den Weg über den Heizer 4 und Zuheizer 5 freigibt (Warm-Stellung).

Die mit Hilfe der Klappe 6 temperierte Luft kann über mittels weiterer Klappen geregelte Luftkanäle verschiedenen Bereichen des Fahrzeuginnenraums zugeführt werden. So ist ein vom Luftführungsgehäuse 7 abzweigender Luftkanal vorgesehen, welcher dem Entfrosten der Windschutzscheibe dient. Die durch den Defrost-Luftkanal geführte Luftmenge wird mittels einer Defrost-Klappe geregelt. Ein weiterer Luftkanal führt zu den Seiten- und Mitteldüsen und ist mittels einer Klappe regelbar. Ferner ist ein Fußraum-Luftkanal vorgesehen, der mit einer Fußraum-Klappe regelbar ist.

Die Klappe 6 weist einen im Wesentlichen ebenen Bereich 10 mit zwei Flächen 10' und 10" auf, wobei die erste Fläche 10' in beiden Endstellungen an entsprechend ausgebildeten Anlageflächen des Luftführungsgehäuses 7 dicht anliegt. Hierbei ist eine quer über die zweite Fläche 10" verlaufende, etwa mittig bezüglich der Fläche 10" angeordnete, Klappenachse 11 vorgesehen, die an ihren Enden je einen Zapfen 12 aufweist, der über den ebenen Bereich 10 übersteht und durch ein in je einem Hebelarm 13 ausgebildetes Langloch 14 ragt und in je einer bogenförmig ausgebildeten Führungsnut 15, die im Luftführungsgehäuse 7 ausgebildet ist, geführt ist. Jeder Hebelarm 13 ist in einem Grenzbereich zwischen dem Heizer 4 und dem Bypass 8 auf der Seite des Verdampfers 3 schwenkbar angebracht, wobei einer der Hebelarme 13 mit einer nicht dargestellten Stellvorrichtung verbunden ist, welche die Klappe 6 betätigt.

An der Klappenachse 11 ist benachbart zu einem der Zapfen 12 ein erstes Getriebeelement, vorliegend in Form eines Zahnrades 16, ausgebildet, das mit einem zweiten, am entsprechenden Hebelarm 13 ausgebildeten zweiten Getriebeelement, vorliegend eine Verzahnung 17 einer Zahnstange, zusammenwirkt, so dass der ebene Bereich 10 der Klappe 6 bei einer Veränderung der Position der Zapfen 12 in den Langlöchern 14 auf Grund des Zusammenwirkens des Zahnrades 16 und der Verzahnung 17 gedreht wird.

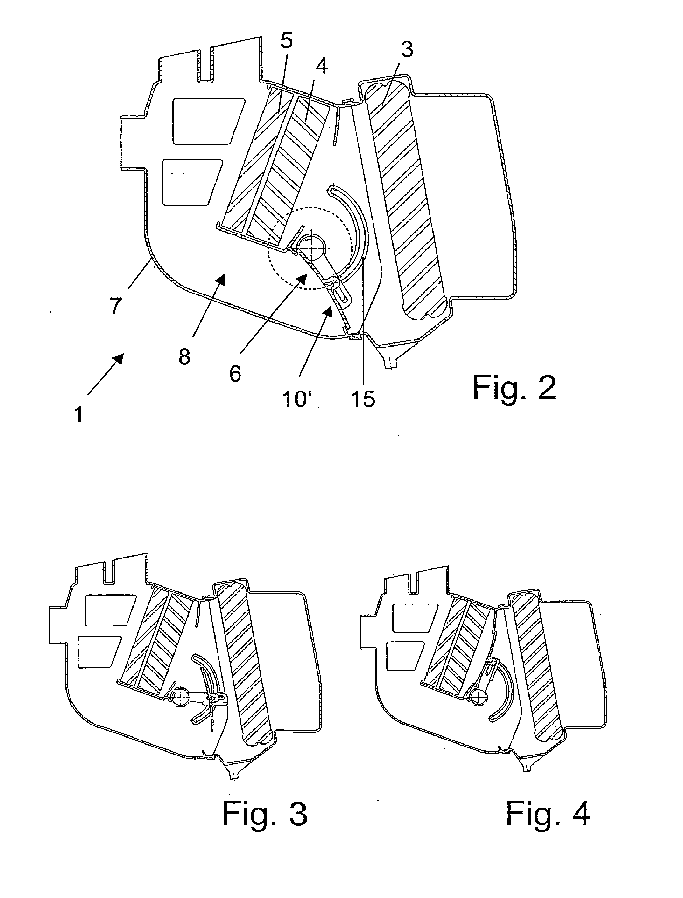

Durch entsprechende Ausgestaltung der Führungsnut 15 kann sichergestellt werden, dass der ebene Bereich 10 die gewünschte Ausrichtung für diese Stellung der Hebelarme 13 einnimmt, insbesondere kann sichergestellt werden, dass in beiden Endstellungen jeweils die gleiche Fläche, nämlich die erste Fläche 10' in Anlage an dem Luftführungsgehäuse 7 ist. Um den von der Konzentrizität bezüglich der Schwenkachse des Hebelarms 13 abweichenden Verlauf besser zu verdeutlichen, ist in Fig. 2 ein entsprechender Kreis um die Schwenkachse des Hebelarms 13 dargestellt.

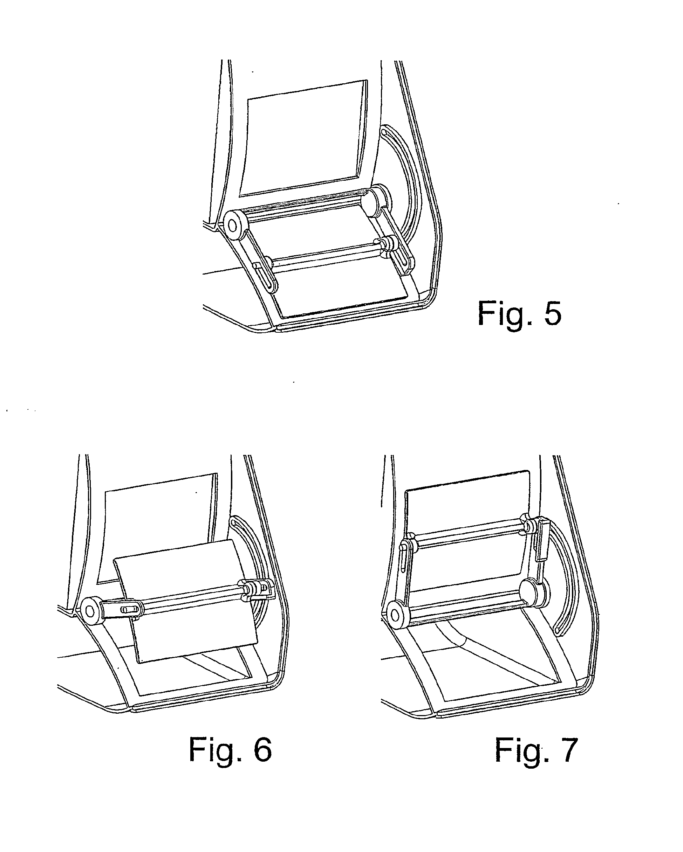

Die Funktion der Klappe 6 ist Folgende: In ihrer Warm-Stellung, die in den Figuren 2 und 5 dargestellt ist, liegt die erste Fläche 10' des im Wesentlichen ebenen Bereichs 10 der Klappe 6 mit seinen Randbereichen dicht am entsprechend ausgebildeten Luftführungsgehäuse 7 an, so dass die entsprechende Öffnung, das heißt der Eintritt des Bypasses 8 verschlossen ist, während die Öffnung durch den Heizer 4 und Zuheizer 5 freigegeben ist, so dass die gesamte vom Gebläse kommende und vom Verdampfer 3 gekühlte und entfeuchtete Luft durch den Heizer 4 und Zuheizer 5 geleitet wird, wodurch sie maximal erwärmt wird.

Erfolgt auf Grund einer Betätigung der Stellvorrichtung eine Drehung der Hebelarme 13 entgegen dem Uhrzeigersinn von Fig. 2, so entfernt sich der Bereich 10 von der Anl-agefläche des Luftführungsgehäuses 7. In Folge der Kurvenbahn der Führungsnut 15 werden die Zapfen 12, geführt in den Langlöchern 14 und somit der gesamte ebene Bereich 10 der Klappe 6 nach außen bewegt. Hierbei wird durch die Getriebeverbindung zwischen der Verzahnung 17, die am Langloch 14 ausgebildet ist, und dem Zahnrad 16, das an der Klappenachse 11 ausgebildet ist, eine Drehung des ebenen Bereichs 10 der Klappe 6 erzwungen, die gemäß der vorliegenden Ausgestaltung im Uhrzeigersinn erfolgt, so dass in einer Misch-Stellung, wie in den Figuren 3 und 6 dargestellt, der ebene Bereich 10 der Klappe 6 leicht geschwenkt ist und die erste Fläche 10' sich in Richtung ihrer anderen Endstellung bewegt. Wird die Stellvorrichtung weiter betätigt, so wird die Bewegung fortgesetzt, bis die erste Fläche 1.0' in Anlage an das Luftführungsgehäuse 7 gelangt und die andere Öffnung dicht verschließt, wie in den Figuren 4 und 7 dargestellt. Die Rückbewegung erfolgt entsprechend.

Gemäß einem zweiten, nicht in der Zeichnung dargestellten Ausführungsbeispiel sind an beiden Seiten der Klappenachse und an beiden Hebelarmen Getriebeelemente in Form von Reibrädern beziehungsweise entsprechend ausgebildeter Abrollflächen vorgesehen.

### Bezugszeichenliste

- 1: Kraftfahrzeug-Klimaanlage
- 3: Verdampfer
- 4: Heizer
- 5: Zuheizer
- 6: Klappe
- 7: Luftführungsgehäuse
- 8: Bypass
- 10: Bereich
- 10', 10": Fläche
- 11: Klappenachse
- 12: Zapfen
- 13: Hebelarm
- 14: Langloch
- 15: Führungsnut
- 16: Zahnrad
- 17: Verzahnung

## Patentansprüche

1. Klappe, insbesondere Misch-Klappe für ein Luftführungsgehäuse (7) einer Kraftfahrzeug-Klimaanlage (1), die in ihren beiden Endstellungen zwei unterschiedliche Öffnungen verschließt, wobei die Klappe (6) einen im Wesentlichen ebenen Bereich (10) mit zwei sich im Wesentlichen eben erstreckenden Flächen (10', 10") aufweist, die auf den beiden einander gegenüberliegenden Seiten des Bereichs (10) angeordnet sind, wobei in beiden Endstellungen die gleiche Fläche (10') des Bereichs (10) der Klappe (6) in Richtung zur jeweiligen, zu verschließenden Öffnung zeigt, **dadurch gekennzeichnet, dass** die Klappe um eine Klappenachse (11) verschwenkbar angeordnet ist.

2. Klappe nach Anspruch 1, **dadurch gekennzeichnet, dass** die Klappe (6) um eine räumlich bewegbare Klappenachse (11) schwenkbar ist.

3. Klappe nach Anspruch 1 oder 2, **dadurch gekennzeichnet, dass** die Klappe (6) mindestens einen Hebelarm (13) aufweist.

4. Klappe nach Anspruch 3, **dadurch gekennzeichnet, dass** die Klappe (6) gegenüber dem Hebelarm (13) in mindestens einem Freiheitsgrad beweglich ist.

5. Klappe nach Anspruch 4, **dadurch gekennzeichnet, dass** die Klappe (6) gegenüber dem Hebelarm (13) in zwei Freiheitsgraden beweglich ist.

6. Klappe nach einem der Ansprüche 3 bis 5, **dadurch gekennzeichnet, dass** der Hebelarm (13) ein Langloch (14) aufweist.

7. Klappe nach einem der Ansprüche 3 bis 6, **dadurch gekennzeichnet, dass** zwischen dem Hebelarm (13) und der Klappenachse (11) eine Getriebeverbindung vorgesehen ist.

8. Klappe nach Anspruch 7, **dadurch gekennzeichnet, dass** die Getriebeverbindung durch ein Zahnrad (16), das an der Klappenachse (11) ausgebildet ist, und eine Verzahnung (17), die am Hebelarm (13) ausgebildet ist, gebildet ist.

9. Klappe nach einem der vorhergehenden Ansprüche, **dadurch gekennzeichnet, dass** die Klappe (6) eine in einer Kurve verlaufende Führung aufweist.

10. Klappe nach Anspruch 9, **dadurch gekennzeichnet, dass** die Führung durch eine Führungsnut (15) gebildet ist.

11. Klappe nach einem der vorhergehenden Ansprüche, **dadurch gekennzeichnet, dass** an der Klappenachse (11) mindestens ein überstehender Zapfen (12) vorgesehen ist, der durch das am schwenkbaren Hebelarm (13) ausgebildete Langloch (14) ragt und in der Führungsnut (15) geführt ist.

12. Klappe nach einem der vorhergehenden Ansprüche, **dadurch gekennzeichnet, dass** die Klappenachse (11) auf der zweiten Fläche (10"), die auf der der ersten Fläche (10') gegenüberliegenden Seite des ebenen Bereichs (10) ausgebildet ist, angeordnet ist.

13. Klappe nach einem der vorhergehenden Ansprüche, **dadurch gekennzeichnet, dass** die Klappenachse (11) etwa, mittig bezüglich des ebenen Bereichs (10) angeordnet ist.

14. Klimaanlage für ein Kraftfahrzeug, **gekennzeichnet durch** eine Klappe (6) gemäß einem der Ansprüche 1 bis 13.

## Claims

1. Flap-valve, in particular a mixer valve for an air duct housing (7) of an air-conditioning unit (1) of a motor vehicle, which in its two end positions closes two different openings, such that the valve (6) comprises an essentially flat area (10) with two surfaces (10', 10") that extend essentially flat and are arranged on the two opposite sides of the said area (10), such that in the two end positions the same surface (10') of the area (10) of the valve (6) faces towards the respective opening to be closed, **characterised in that** the valve is arranged to swivel about a valve axle (11).

2. Flap-valve according to Claim 1, **characterised in that** the valve (6) can swivel about a valve axle (11) which can be moved spatially.

3. Flap-valve according to Claims 1 or 2, **characterised in that** the valve (6) has at least one lever arm (13).

4. Flap-valve according to Claim 3, **characterised in that** relative to the lever arm (13), the valve (6) can be moved with at least one degree of freedom.

5. Flap-valve according to Claim 4, **characterised in that** relative to the lever arm (13), the valve (6) can be moved with two degrees of freedom.

6. Flap-valve according to any of Claims 3 to 5, **characterised in that** the lever arm (13) has a slot (14).

7. Flap-valve according to any of Claims 3 to 6, **characterised in that** a gear connection is provided between the lever arm (13) and the valve axle (11).

8. Flap-valve according to Claim 7, **characterised in that** the gear connection is formed by a pinion (16) attached on the valve axle (11) and a rack (17) on the lever arm (13).

9. Flap-valve according to any of the preceding claims, **characterised in that** the valve (6) comprises a guide that extends in a curve.

10. Flap-valve according to Claim 9, **characterised in that** the guide consists of a guiding groove (15).

11. Flap-valve according to any of the preceding claims, **characterised in that** at least one projecting pin (12) is provided on the valve axle (11), which projects through the slot (14) formed in the swivelling lever arm (13) and is guided in the guiding groove (15).

12. Flap-valve according to any of the preceding claims, **characterised in that** the valve axle (11) is arranged on the second surface (10") located on the side of the flat area (10) that is opposite the first surface (10'). '

13. Flap-valve according to any of the preceding claims, **characterised in that** the valve axle (11) is positioned approximately centrally in relation to the flat area (10).

14. Air-conditioning unit for a motor vehicle, **characterised in that** it comprises a flap-valve (6) according to any of Claims 1 to 13.

## Revendications

1. Clapet, en particulier clapet de mélange pour un carter de guidage d'air (7) d'un système de climatisation de véhicule (1), qui ferme deux ouvertures différentes dans ses deux positions extrêmes, le clapet (6) présentant une zone (10) sensiblement plane avec deux surfaces (10', 10'') s'étendant sensiblement à plat, qui sont disposées sur les deux côtés se faisant face de la zone (10), la surface (10') identique de la zone (10) du clapet (6) étant dirigée en direction de l'ouverture respective à fermer dans les deux positions finales, **caractérisé en ce que** le clapet est disposé de façon à pouvoir basculer autour d'un axe de clapet (11).

2. Clapet selon la revendication 1, **caractérisé en ce que** le clapet (6) peut basculer autour d'un axe de clapet (11) mobile dans l'espace.

3. Clapet selon la revendication 1 ou 2, **caractérisé en ce que** le clapet (6) présente au moins un bras de levier (13).

4. Clapet selon la revendication 3, **caractérisé en ce que** le clapet (6) est mobile par rapport au bras de levier (13) dans au moins un degré de liberté.

5. Clapet selon la revendication 4, **caractérisé en ce que** le clapet (6) est mobile par rapport au bras de levier (13) dans deux degrés de liberté.

6. Clapet selon l'une quelconque des revendications 3 à 5, **caractérisé en ce que** le bras de levier (13) présente un trou oblong (14).

7. Clapet selon l'une quelconque des revendications 3 à 6, **caractérisé en ce qu'**une liaison d'engrenage est prévue entre le bras de levier (13) et l'axe de clapet (11).

8. Clapet selon la revendication 7, **caractérisé en ce que** la liaison d'engrenage est formée par une roue dentée (16), qui est formée sur l'axe de clapet (11), et une denture (17) qui est conçue sur le bras de levier (13).

9. Clapet selon l'une quelconque des revendications précédentes, **caractérisé en ce que** le clapet (6) présente un guide agencé dans une came.

10. Clapet selon la revendication 9, **caractérisé en ce que** le guide est formé par une rainure de guidage (15).

11. Clapet selon l'une quelconque des revendications précédentes, **caractérisé en ce que**, sur l'axe de clapet (11), il est prévu au moins un pivot (12) proéminent qui dépasse à travers le trou oblong (14) réalisé sur le bras de levier (13) basculant et est guidé dans la rainure de guidage (15).

12. Clapet selon l'une quelconque des revendications précédentes, **caractérisé en ce que** l'axe de clapet (11) est disposé sur la seconde surface (10"), qui est réalisé sur le côté, opposé à la première surface (10'), de la zone (10) plane.

13. Clapet selon l'une quelconque des revendications précédentes, **caractérisé en ce que** l'axe de clapet (11) est disposé à peu près au centre par rapport à la zone (10) plane.

14. Système de climatisation pour un véhicule, **caractérisé par** un clapet (6) selon l'une quelconque des revendications 1 à 13.
